# EUROPÄISCHE PATENTSCHRIFT

(11) **EP 0 879 378 B1**
(45) Veröffentlichungstag und Bekanntmachung des Hinweises auf die Patenterteilung: **16.08.2000**
(21) Anmeldenummer: 97917994.2
(22) Anmeldetag: 14.02.1997
(51) Int. Cl.: F16L 27/08

(54) **DREHDURCHFÜHRUNG**
ROTARY TRANSMISSION LEADTHROUGH
PASSAGE TOURNANT

(30) Priorität: 16.02.1996 DE 19605797
(43) Veröffentlichungstag der Anmeldung: 25.11.1998
(73) Patentinhaber: Georg Springmann Industrie- und Bergbautechnik GMBH, 45472 Mülheim an der Ruhr (DE)
(72) Erfinder: SPRINGMANN, Georg, D-45472 Mülheim an der Ruhr (DE)
(74) Vertreter: Viering, Jentschura & Partner
(86) Internationale Anmeldenummer: DE9700295
(87) Internationale Veröffentlichungsnummer: WO9730307

(56) Entgegenhaltungen:
- EP-A- 0 368 024
- US-A- 3 195 931
- US-A- 3 770 181
- US-A- 4 817 995

## Beschreibung

Die vorliegende Erfindung betrifft eine Drehdurchführung mit den Merkmalen des Hauptanspruches.

Drehdurchführungen werden in unterschiedlichen Industriezweigen, insbesondere für Stranggußanlagen in der Stahlindustrie benötigt. Bei diesen Stranggußanlagen läuft der rotglühende Stahl in Strangform über Walzen, die außen in Lagern in Lagerböcken drehbar gelagert sind. Diese Walzen werden in einem geschlossenen Kreislauf durch die Zuführung von Wasser unter Druck in das Innere der Walzen zur Abführung der Wärme gekühlt. Mit der Drehdurchführung wird der Übergang von dem sogenannten Rotor und der daran angeflanschten Kühlwasserleitung zu dem an der Walze befestigten und sich damit mitdrehenden Gehäuse abgedichtet.

Im Stand der Technik sind hauptsächlich zwei verschiedene Arten von Drehdurchführungen bekannt. Eine erste Ausführungsform der Drehdurchführungen weist eine außerhalb des Walzeninneren liegende Baueinheit auf, die die Bauelemente für die notwendige Wasserzufuhr, Lagerung und Dichtung enthält. Bauartbedingt weisen derartige Anlagen mit solchen Drehdurchführungen eine erhebliche Breite rechts und links der Lagerböcke auf.

Zur Verminderung der Anlagenbreite sind daher seitens der Anlagenbauer Forderungen aufgestellt worden, Lagerung und dichtendes System in das Innere der Walze zur verlegen.

Zur Aufnahme der Drehdurchführung in der Walze ist eine Bohrung vorgesehen, in die die Drehdurchführung eingesteckt wird und dann beispielsweise über eine Verschraubung mit der Walze ortsfest verbunden wird. Das zur Kühlung verwendete Wasser wird unter einem Überdruck von bis zu 15 Atmosphären in die Drehdurchführung geleitet, und der auf die Bauelemente einwirkende Wasserdruck stellt zusammen mit der Bewegung derselben und der thermischen Beanspruchung erhebliche Anforderungen an die Abdichtungstechnik.

Eine verwendete Technik zur Abdichtung der sich bei Drehung der Walze in einer relativen Drehbewegung zueinander bewegenden Bauelemente der Drehdurchführung basiert auf der Verwendung einer Radialdichtung bestehend aus kreisförmigen O-Ringen oder Lippendichtungen aus Elastomer als dem maßgeblichen Dichtungselement.

Andere Techniken sind in der EP-A1-392.838 beschrieben. In dieser Druckschrift ist eine Drehdurchführung mit einer Dichtungsanordnung beschrieben, die durch den hydraulischen Druck der Flüssigkeit betätigt wird. Es handelt sich jedoch dabei um eine konstruktiv aufwendige Anordnung. Weitere Drehdurchführungen sind in der EP-A-368024 und US-A-4817995 beschrieben. Den im Stand der Technik bekannten Drehdurchführungen ist gemeinsam, daß besonders bei radialen Belastungen der Walze infolge der relativ starren Wasserzu- und -abführungen Scherkräfte auf die Drehdurchführung wirken und einen starken Verschleiß der Drehdurchführung verursachen. Hinzu kommt die zumeist aufwendige mechanische Konstruktion der im Stand der Technik bekannten Drehdurchführungen.

Es ist daher eine Aufgabe der vorliegenden Erfindung, eine verschleißfeste Drehdurchführung bereitzustellen, die einen zuverlässigen Betrieb bei verlängerten Standzeiten ermöglicht, einen einfachen Aufbau besitzt und bei den im Einsatz befindlichen Stranggießanlagen ohne Umrüstung der Anlage selbst als Austauschbauteil verwendbar ist.

Die Aufgabe der Erfindung wird gelöst durch Bereitstellung einer Drehdurchführung zum Anschluß einer Kühlmittelzuführung einer Walze, insbesondere für Stranggießanlagen, die über Zapfen in Lagerböcken in Wälzlagern gelagert ist und die über axiale Bohrungen durch die Zapfen mit dem Kühlmittel versorgt wird, mit einem Gehäuse, einem drehbar im Gehäuse gelagerten Rotor, einem auf dem im Gehäuse befindlichen Ende des Rotors, dem Rotorfuß, festgelegten und sich mit dem Rotor drehenden ersten Dichtelelement, das eine erste Dichtfläche aufweist, einem zweiten Dichtelement, das eine zweite, auf der ersten Dichtfläche ablaufende zweite Dichtfläche aufweist und das von einem in das Gehäuse an der dem Walzeninneren zugewandten Ende des Gehäuses eingepassten Verschlußteil getragen wird, und einer den Rotor und das Verschlußteil durchdringenden axialen Bohrung, wobei der einstückige Rotor einen Rotorkopf, der an der dem Walzeninneren abgewandten Seite des Gehäuses einen aus dem Gehäuse überstehenden Endabschnitt aufweist, an dem eine Kühlmittelzu-, bzw. abführung angeschlossen werden kann, einen Rotorschaft und einen Rotorfuß druckdicht miteinander verschweißt umfasst und der Rotorschaft als elastisches Bauelement in Form eines Kompensators ausgebildet ist.

Die erfindungsgemäße Drehdurchführung besitzt die Vorteile, daß sie einfach aufgebaut ist, eine erhöhte Verschleißfestigkeit und eine verringerte Störanfälligkeit besitzt und somit verlängerte Standzeiten ermöglicht. Die verwendeten Bauteile lassen sich bei Verschleiß einfach auswechseln.

Als Materialien für das Gehäuse werden dabei üblicherweise Messing, Lagerbronzen und Bleibronzen oder ähnliche Materialien verwendet. Der Rotor ist gewöhnlich aus einem korrosionsbeständigen Stahl gefertigt. Dabei kann es sich bevorzugt um Stähle der V2A- oder V4A-Sorten handeln.

Der einstückig ausgebildete hohlzylindrische Rotor umfasst einen Rotorkopf, einen in Form einer elastischen Hülse ausgebildeten Rotorschaft und einen Rotorfuß und ist in einer Axialbohrung in dem Gehäuse drehbar gelagert. Rotorkopf, Rotorschaft und Rotorfuß sind druckdicht durch Aneinanderschweißen der einzelnen Bauelemente verbunden. Die axiale Länge des Rotors ist so bemessen, daß an dem auf der dem Walzeninneren entgegengesetzten Gehäuseseite herausragenden Rotorkopf ein Anschlußstück für die Kühlmittelzu- und/oder - abführung festgesetzt werden kann. Durch die Ausgestaltung des Rotorschaftes als elastische zylindrische Hülse in Form eines Kompensators, können über das Anschlußstück übertragene und auf die Dichtelemente einwirkende Kräfte abgefedert werden, und so kann die Standzeit der erfindungsgemäßen Drehdurchführung erhöht werden.

Es kann dabei zwischen dem Rotorkopf und dem Gehäuse ein Spiel vorgesehen sein, das bei Krafteinwirkung auf den Rotorkopf durch die elastische Ausgestaltung des Rotorschaftes eine gewisse radiale und/oder axiale Beweglichkeit des Rotorkopfes ermöglicht.

In einer bevorzugten Ausführungsform weist die erfindungsgemäße Drehdurchführung zwischen Rotorkopf und Gehäuse ein Lager auf, das der besseren Führung und Lagerung des Rotors im Gehäuse dient. Bevorzugt ist dieses Lager in Form eines Kugel- oder Walzenlagers ausgebildet, das zwischen Rotorkopf und Gehäuse eingepasst ist. Bei dieser Ausführungsform sind die Standzeiten der erfindungsgemäßen Drehdurchführung weiter verbessert.

In einer anderen bevorzugten Ausführungsform ist das Lager derart ausgebildet, daß die erfindungsgemäße Drehdurchführung an dem innenliegenden Ende des Rotorkopfes einen Kragen aufweist, der über eine kreisringförmige Planfläche auf einer entsprechenden, um den Rotorkopf kreisringförmigen Planfläche des Gehäuses aufliegt. In dieser Ausführungsform wird der gesamte Rotor zwischen den aufeinanderliegenden Planflächen des Rotorkopfes und des Gehäuses auf der einen Seite und den aufeinderliegenden Planflächen der Dichtelemente am innenliegenden Ende des Rotors in der "Schwebe" gehalten, gegebenenfalls unter einer geringen Vorspannung des als elastische Hülse ausgestalteten Rotorschaftes. Es ist auch möglich, die Planfläche um den Rotorschaft in Form einer in den Rotorkragen integrierten Scheibe aus einem keramischen Material, deren Planfläche auf der gegenüberliegenden Planfläche des Gehäuses abläuft, zu gestalten. Gleichwirkend mit dieser Ausführungsform ist selbstverständlich die entsprechend umgekehrte Anordnung von Planfläche des Rotorkopfes und Scheibe aus keramischen Material in der Planfläche des Gehäuses.

In einer weiter bevorzugten Ausgestaltung ist zwischen den aufeinanderliegenden Planflächen des Rotorkopfes und des Gehäuses eine Anlaufscheibe vorgesehen, die bevorzugt aus einem Material wie Lagerbronze, Messing oder PTFE besteht.

Zwischen Rotorkopf und Gehäuse kann eine aus dem gleichen Material wie Lagerbronze, Messing oder PTFE gefertigte Lagerbuchse angeordnet sein, die für eine Lagerung und leichte Drehbarkeit des Rotors im Gehäuse sorgt.

Obgleich die Dichtelemente auch durch aufeinander ablaufende Planflächen am Rotorkopf und Deckel gebildet werden können, ist die Verwendung von zumindest einem in eine der Planflächen integrierten Gleitring als Dichtelement, die in der Regel aus Siliciumcarbid, Kohlegraphit oder ähnlichen Materialien bestehen, bevorzugt. Der eine dieser Gleitringe ist im ortsfesten Bauelement fest verankert, auf dessen Planfläche die Gegenplanfläche des anderen Gleitringes als rotierender Gegenring ablaufen kann.

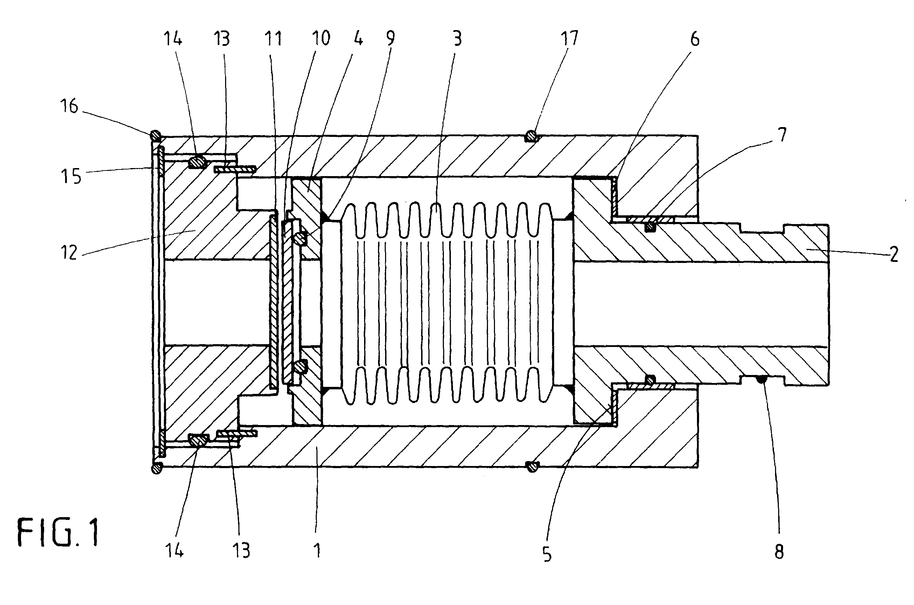

Ein Beispiel der Erfindung ist in der einzigen Fig. 1 dargestellt.

Fig. 1 stellt eine schematische Querschnittsansicht einer Ausführungsform der erfindungsgemäßen Drehdurchführung dar. In dem Gehäuse 1 ist der aus dem Rotorkopf 2, dem Rotorschaft 3 und dem Rotorfuß 4 bestehende Rotor angeordnet. Rotorkopf 2, Rotorschaft 3 und Rotorfuß 4 sind druckdicht aneinander geschweißt. Der Rotorkopf 2 liegt mit der dem Gehäuse zugewandten Planfläche des Kragens 5 auf einer entsprechenden kreisringförmigen Planfläche des Gehäuses auf.

Zwischen der kreisringförmigen Planfläche am Kragen des Rotorkopfes und der entsprechenden Gegenfläche am Gehäuse kann eine Anlaufscheibe 6 vorgesehen sein, die der besseren Lagerung und Drehbarkeit des Rotors dient. Für den gleichen Zweck kann zwischen dem radialen Rotorkopfabschnitt, der dem Kragen benachbart ist, und der entsprechenden Gehäusebohrung eine Lagerbuchse 7 vorgesehen sein, die der erleichterten Drehbarkeit und Lagerung des gesamten Rotors dient. Anlaufscheibe 6 und Lagerbuchse 7 können aus den gleichen Materialien gefertigt sein, die zum Beispiel aus Messing, Lagerbronze und PTFE ausgewählt werden können. Aufgrund seiner Fließeigenschaften ist die Verwendung von PTFE bevorzugt.

Am außenliegenden Ende weist der Rotorkopf eine Nut mit einem darin befindlichen Schweißpunkt 8 auf, die der Befestigung und Arretierung der Kühlmittelzuführung dienen.

An der der Anlaufscheibe 6 gegenüberliegenden Seite des Rotorkopfes ist der Rotorschaft 3, der in Form einer elastischen Hülse ausgestaltet ist, nach Art eines Kompensators, angeschweißt. An dem innenliegenden Ende des Rotorschaftes wiederum ist der Rotorfuß angeordnet, der über einen in den Rotorkopf eingelassenen O-Ring 9 nachgebend unterstützt den Gleitring 10 gegen den Gleitring 11 preßt, der wiederum im Deckel 12 festgelegt ist und von diesem getragen wird. Anstelle des Gleitringes 11 kann der Deckel 12 selbst als Gleitfläche dienen, wenn es aus einem entsprechenden Material wie Lagerbronze hergestellt ist.

Der Deckel 12 ist über die Spannstifte 13 gegen ein Verdrehen gesichert und gegen das Gehäuse 1 über den O-Ring 14 abgedichtet. Ein Herausfallen des Deckels wird durch den Seegerring 15 verhindert.

Die Gleitringe können aus den im Stand der Technik bekannten Materialien gefertigt sein, bevorzugt ist jedoch aufgrund der Verschleißfestigkeit die Verwendung von Siliciumcarbid oder Elektrokohlegraphit. Zur Abdichtung der in den Zapfen der Transportwalze eingesetzten Drehdurchführung sind in Außennuten am Gehäuse eingesetzte O-Ringe 16 und 17 vorgesehen.

Die verwendeten O-Ringe 9, 10 und 11 können aus den im Stand der Technik üblichen Materialien wie Gummi, Silikongummi usw. gefertigt sein.

Bei der in der Figur gezeigten Ausführungsform wird der gesamte Rotor zwischen den Planflächen am Rotorkopf und -gehäuse und den Gleitringflächen eingespannt gehalten. Gegebenenfalls kann dadurch eine Vorspannung und damit verbunden eine bessere Abdichtwirkung zwischen den Dichtflächen 10 und 11 erzielt werden, daß bei entsprechend geringfügigem axialem Übermaß des Rotorschaftes nach dem Einsetzen des Rotors in das Gehäuse nach dem Aufsetzen des Deckels und Sichern des Deckels über den Seegerring 15 eine geringe Vorspannung erzielt wird.

Besonders bei dieser Ausführungsform ist es vorteilhaft, eine größere radiale Beabstandung des Kragens am Rotorkopf zur Gehäuseinnenwand und an dem benachbarten Rotorkopfabschnitt zu dem entsprechenden Endabschnitt der Gehäusewandung, d.h. eine Lagerbuchse 7 wird nicht notwendigerweise verwendet, vorzusehen, so daß eine größere radiale Beweglichkeit des Rotorkopfes ermöglicht wird.

Nach dem Einsetzen der Drehdurchführung in die Bohrung des Zapfens wird die Drehdurchführung durch nicht in der Zeichnung dargestellte Befestigungsvorrichtungen mit dem Zapfen der Transportwalze drehfest verbunden. Durch die den Rotor und der Deckel durchdringende axiale Bohrung kann dann das über die Kühlmittelzuführung zugeführte Kühlmittel in das Innere der Walze geleitet werden und, falls eine Zuführung über ein durch die axiale Bohrung in das Innnere reichendes Siphonrohr erfolgt, auch wieder abgeführt werden. Die erfindungsgemäße Drehdurchführung kann somit in der Ein- oder Zweiwegeausführungform Verwendung finden.

Vor dem Anschluß der Kühlmittelzu-, bzw. -abführung kann über den aus dem Gehäuse herausragenden Rotorkopf eine Abdichtmanschette geschoben werden, die ein Eindringen von Verunreinigungen in den Spalt zwischen Rotorkopf und Gehäuse verhindert.

Durch die Anordnung der für die Demontage der Drehdurchführung zu entfernenden Bauteile in das in dem Zapfen gelegene Ende der Drehdurchführung sind insbesondere die dort vorgesehenen Dicht- und Gleitelemente gegen ein Eindringen von Schmutz von außen hervorragend geschützt. In Verbindung mit der zuvor erwähnten Dichtmanschette um den Rotorkopf an der Außenseite des Gehäuses, ist eine hervorragende Abdichtung gegen jegliche Verunreinigungen ermöglicht, was zu gegenüber den aus dem Stand der Technik bekannten Drehdurchführungen erheblich verlängerten Standzeiten führt.

## Patentansprüche

1. Drehdurchführung zum Anschluß einer Kühlmittelzuführung einer Walze, insbesondere für Stranggießanlagen, die über Zapfen in Lagerböcken in Wälzlagern gelagert ist und die über axiale Bohrungen durch die Zapfen mit dem Kühlmittel versorgt wird, mit einem Gehäuse (1), einem drehbar im Gehäuse (1) gelagerten Rotor (2;3;4), einem auf dem im Gehäuse befindlichen Ende des Rotors, dem Rotorfuß (4), festgelegten und sich mit dem Rotor drehenden ersten Dichtelelement (10), das eine erste Dichtfläche aufweist, einem zweiten Dichtelement (11), das eine zweite, auf der ersten Dichtfläche ablaufende zweite Dichtfläche aufweist und das von einem in das Gehäuse (1) an der dem Walzeninneren zugewandten Ende des Gehäuses (1) eingepassten Verschlußteil (12) getragen wird, und einer den Rotor und das Verschlußteil (12) durchdringenden axialen Bohrung, wobei der einstückige Rotor einen Rotorkopf (2), der an der dem Walzeninneren abgewandten Seite des Gehäuses einen aus dem Gehäuse überstehenden Endabschnitt aufweist, an dem eine Kühlmittelzu-, bzw. abführung angeschlossen werden kann, einen Rotorschaft (3) und einen Rotorfuß (4) druckdicht miteinander verschweißt umfasst und der Rotorschaft (3) als elastisches Bauelement in Form eines Kompensators ausgebildet ist.

2. Drehdurchführung nach Anspruch 1, dadurch gekennzeichnet, daß zwischen Rotorkopf (2) und Gehäuse (1) ein Lager angeordnet ist.

3. Drehdurchführung nach Anspruch 2, dadurch gekennzeichnet, daß das Lager in Form eines Kugel- oder Walzenlagers ausgebildet ist, das zwischen Rotorkopf (2) und Gehäuse (1) eingepasst ist.

4. Drehdurchführung nach Anspruch 2, dadurch gekennzeichnet, daß das Lager (7) dadurch ausgebildet ist, daß der Rotorkopf (2) an dem, dem Rotorschaft (3) zugewandten Ende einen Kragen mit einer kreisringförmigen Planfläche aufweist, die auf einer entsprechenden kreisringförmigen Planfläche des Gehäuses (1) abläuft.

5. Drehdurchführung nach Anspruch 4, dadurch gekennzeichnet, daß zwischen der kreisringförmigen Planfläche des Rotorkopfes (2) und der entsprechenden innenseitigen kreisringförmigen Planfläche des Gehäuses (1) eine Anlaufscheibe (6) angeordnet ist.

6. Drehdurchführung nach einem der vorhergehenden Ansprüche, dadurch gekennzeichnet, daß zwischen Rotorkopf (2) und Gehäuse (1) eine Lagerbuchse (7) aus einem schmierfähigen Material angeordnet ist.

7. Drehdurchführung nach einem der vorhergehenden Ansprüche, dadurch gekennzeichnet, daß zumindest eines der ersten und zweiten Dichtelemente (10;11) als Gleitring ausgebildet ist.

8. Drehdurchführung nach Anspruch 7, dadurch gekennzeichnet, daß der Gleitring (10;11) aus Elektrokohlegraphit oder Siliciumcarbid besteht.

9. Drehdurchführung nach Anspruch 6 oder 7, dadurch gekennzeichnet, daß zwischen dem den Gleitring tragenden Rotorfuß (4) und dem Gleitring (10) ein elastischer O-Ring vorgesehen ist.

## Claims

1. A rotary transmission leadthrough for connecting the coolant supply of a roll, in particular for continuous casting systems, which is supported in the bearing pedestals of antifriction bearings by means of journals and supplied with the coolant through axial borings extending through said journals, comprising a housing (1) ; a rotor (2; 3; 4) which is rotatably supported in said housing (1); a first sealing element (10) which is fixed on the rotor base (4) constituting the rotor end accommodated in the housing (1), rotates together with said rotor and has a first sealing face; a second sealing element (11) having a second sealing face that moves on the first sealing face, and being supported by a cover part (12) fitted into the housing (1) at the end of the housing (1) facing the interior of the roll; and an axial boring penetrating the rotor and the cover part (12); wherein the integral rotor comprises a rotor head (2) having an end portion projecting from the housing at the side of the housing facing away from the interior of the roll, to which end portion a coolant supply and outlet, respectively, may be connected, a rotor shank (3) and a rotor base (4) which are welded together to be pressure-sealed, and wherein the rotor shank (3) is designed as an elastic component being formed as a compensator.

2. A rotary transmission leadthrough according to claim 1, characterized in that a bearing is arranged between the rotor head (2) and the housing (1).

3. A rotary transmission leadthrough according to claim 2, characterized in that said bearing is formed as a ball bearing or a roller bearing which is fitted in between the rotor head (2) and the housing (1).

4. A rotary transmission leadthrough according to claim 2, characterized in that the bearing (7) is formed by the rotor head (2) comprising a collar at its end facing the rotor shank (3), said collar having an annular end face which moves on a corresponding annular end face of the housing (1).

5. A rotary transmission leadthrough according to claim 4, characterized in that a thrust washer (6) is arranged between the annular end face of the rotor head (2) and the corresponding inner annular end face of the housing (1).

6. A rotary transmission leadthrough according to any one of the previous claims, characterized in that a bearing bush (7) made of a lubricious material is arranged between the rotor head (2) and the housing (1).

7. A rotary transmission leadthrough according to any one of the previous claims, characterized in that at least one of the first and second sealing elements (10; 11) is formed as a sliding ring.

8. A rotary transmission leadthrough according to claim 7, characterized in that said sliding ring (10; 11) consists of electrocoal graphite or of silicon carbide.

9. A rotary transmission leadthrough according to claim 6 or 7, characterized in that an elastic O-ring is provided between the rotor base (4) supporting the sliding ring, and the sliding ring (10).

## Revendications

1. Passage tournant pour le raccordement d'un système d'amenée de fluide de refroidissement d'un cylindre, notamment pour des installations de coulée continue, qui est tourillonné par des tourillons dans des supports de paliers dans des paliers à roulements et est alimenté par le fluide de refroidissement par l'intermédiaire de perçages axiaux traversant les tourillons, comportant un boîtier (1), un rotor (2; 3; 4) tourillonné de manière à pouvoir tourner dans le boîtier (1), un premier élément d'étanchéité (10) qui est fixé sur l'extrémité du rotor située dans le boîtier, à savoir le pied (4) du rotor, et qui tourne avec le rotor et comporte une première surface d'étanchéité, un second élément d'étanchéité (11), qui comporte une seconde surface d'étanchéité, qui circule sur la première surface d'étanchéité, et qui est porté par une partie de fermeture (12) qui est insérée dans le boîtier (1) à l'extrémité de ce boîtier (1) tournée vers l'intérieur du cylindre, et un perçage axial qui traverse le rotor et la partie de fermeture (12), le rotor monobloc comprenant une tête de rotor (2) qui possède sur le côté du boîtier tourné à l'opposé de l'intérieur du cylindre, une section d'extrémité qui fait saillie hors du boîtier et à laquelle peut être raccordé un système d'amenée et d'évacuation du fluide de refroidissement, un arbre (3) de rotor et un pied (4) de rotor, qui sont soudés entre eux d'une manière étanche à la pression, et l'arbre (3) du rotor étant agencé sous la forme d'un composant élastique se présentant sous la forme d'un dispositif de compensation.

2. Passage tournant selon la revendication 1, caractérisé en ce qu'un palier est disposé entre la tête (2) du rotor et le boîtier (1).

3. Passage tournant selon la revendication 2, caractérisé en ce que le palier est agencé sous la forme d'un roulement à billes ou à rouleaux, qui est inséré entre la tête (2) du rotor et le boîtier (1).

4. Passage tournant selon la revendication 2, caractérisé en ce que le palier (7) est agencé de telle sorte que la tête (2) du rotor comporte, sur l'extrémité tournée vers l'arbre (3) du rotor, un collet possédant une surface plane en forme d'anneau circulaire, qui circule sur une surface plane correspondante en forme d'anneau circulaire du boîtier (1).

5. Passage tournant selon la revendication 4, caractérisé en ce qu'une rondelle de butée (6) est disposée entre la surface plane en forme d'anneau circulaire de la tête (2) du rotor et la surface plane en forme d'anneau circulaire correspondante, située sur le côté intérieur, du boîtier (1).

6. Passage tournant selon l'une des revendications précédentes, caractérisé en ce qu'un coussinet de palier (7) réalisé en un matériau lubrifiant est disposé entre la tête (2) du rotor et le boîtier (1).

7. Passage tournant selon l'une des revendications précédentes, caractérisé en ce qu'au moins l'un des premier et second éléments d'étanchéité (10; 11) est agencé sous la forme d'une bague coulissante.

8. Passage tournant selon la revendication 7, caractérisé en ce que la bague coulissante (10; 11) est réalisée en graphite pour charbon à électrodes ou en carbure de silicium.

9. Passage tournant selon la revendication 6 ou 7, caractérisé en ce qu'une bague torique élastique est prévue entre le pied (4) du rotor, qui porte la bague coulissante, et la bague coulissante (10).
